Europäisches Patentamt

European Patent Office

Office européen des brevets

(11) Publication number: **0 112 893**
**B1**

# (12) EUROPEAN PATENT SPECIFICATION

(45) Date of publication of patent specification: **08.10.86**

(51) Int. Cl.⁴: **B 01 D 33/18**

(21) Application number: **83902317.3**

(22) Date of filing: **11.07.83**

(86) International application number:
**PCT/SE83/00278**

(87) International publication number:
**WO 84/00311 02.02.84 Gazette 84/03**

(54) **A DEVICE FOR SEPARATING A LIQUID FROM A SLURRY AND COMPRISING A SPILLWAY.**

(30) Priority: **12.07.82 SE 8204278**

(43) Date of publication of application:
**11.07.84 Bulletin 84/28**

(45) Publication of the grant of the patent:
**08.10.86 Bulletin 86/41**

(84) Designated Contracting States:
**AT BE CH DE FR GB LI LU NL**

(56) References cited:
**DE-A-2 751 091**

**Patent Abstracts of Japan, Vol. 4 No. 186 C 36, abstract of JP 55-127160.**

(73) Proprietor: **ROTO-SIEVE AB**
**Hjorthagsgatan 10**
**S-413 17 Göteborg (SE)**

(72) Inventor: **ANDERSSON, Sören**
**Olshammarsgatan 10, van 1**
**S-422 47 Hisings Backa (SE)**
Inventor: **JOHANSSON, Ingvar**
**Varvindsgatan 49**
**S-417 12 Göteborg (SE)**

(74) Representative: **Tiedtke, Harro, Dipl.-Ing. et al**
**Patentanwaltsbüro Tiedtke-Bühling-Kinne-Grupe-Pellmann-Grams-Struif Bavariaring 4**
**Postfach 20 24 03**
**D-8000 München 2 (DE)**

Courier Press, Leamington Spa, England.

## Description

The present invention concerns a device for separating a liquid from a slurry and which comprises a rotatable longitudinally extending drum provided with an inlet at one end thereof, the mantle wall of said drum being provided with water passage openings and internally having a helicoidal extending flange element for feeding the slurry along the drum and which follows the drum in the rotation movement of said drum, wherein a wall element is positioned in the interior of the drum and acts as a partition between the slurry department of the drum and a spillway opening means.

A device of the above mentioned kind according to the preamble of claim 1 is already known by DE — A — 27 51 091.

The design of this known device is such, that the drum can be directly driven, thereby however requiring the arrangement of the driving means at a location which complicates the overall construction.

The object of the invention at first hand is to provide a device of the kind stated above which makes possible to manufacture it at lower costs than before, but which is also well adapted to be driven directly by rotating the drum by means at the central part of the drum end wall.

Said object is being obtained with a device according to the present invention which is generally characterized by providing an especially shaped partition wall element which together with an end wall of the drum defines a spillway-chamber from which a plurality of outlet passages extend through the mantle of the drum, so that the end wall is centrally connectable to means for driving and/or supporting the drum.

The invention will be described below as two preferred examples of embodiment with reference to the accompanying drawings, wherein

Fig. 1 shows a device schematically seen in perspective and partially broken up condition and

Fig. 2 shows a further embodiment of a separating device.

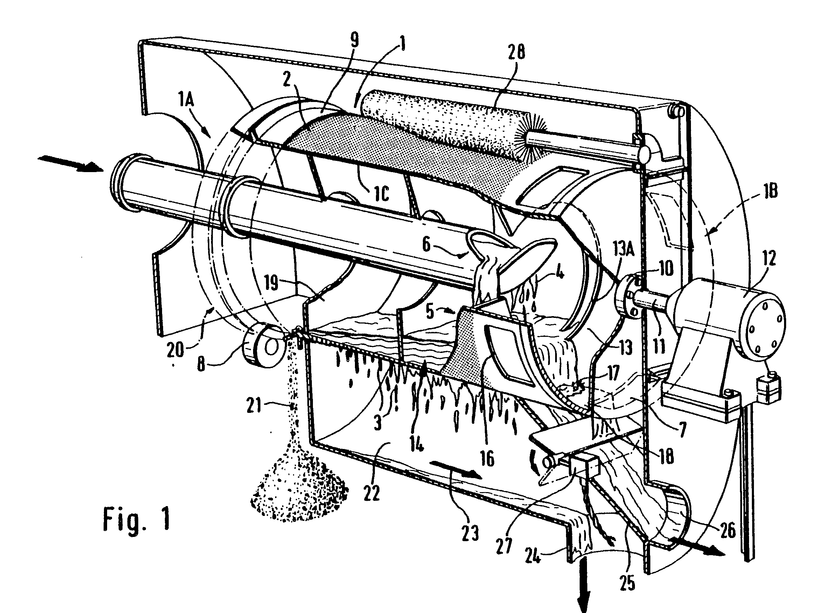

A separating drum as shown in Fig. 1 and which makes a part of a device for separating a liquid according to the invention is indicated with 1 and comprises a plurality of openings 2 distributed peripherally and longitudinally of the drum and penetrating the mantle thereof. Said openings are intended to act as passageways for liquid 3 separated from a slurry 4 charged into the internal department 5 of the drum by means of a charging device 6 which extends into the drum 1 from one end 1A thereof. The other end 1B is provided with an end wall 7 closing the interior of the drum.

The drum 1 is supported and rotated by means of a plurality of supporting rollers preferably arranged in pairs, said rollers 8 for instance supporting the drum at one end 1A thereof along a running surface 9 which extends along the periphery of the drum, and a drive shaft 11 respectively, the latter connected to the end wall 7 of the drum at the central part 10 thereof, said shaft in turn being connected to a drive motor 12 which is supported by a structure not shown in the drawings. It is also possible for instance to provide the drum with an end wall at both of its ends and in that case the drum can be driven and/or supported by means of driving and/or supporting means at each of the end walls.

In the vicinity of said end wall 7 the interior of the drum is provided with a partition wall 13 which is intended for separating a slurry receiving department 14 in the interior, i.e. from the internal department 5 of the drum from an opening means in form of outlet passages 16 being part of a spillway. Said partition wall 13 is a ring shaped narrowing disc member or plate connected to the internal mantle surface 1C of the drum from which it extends in the direction towards the centrum of the drum 1 and limited by a free inner edge 13A intended to be passed by excess slurry 17 spilled from the interior 5 of the drum.

The opening means 16 at one side of said partition wall 13 comprises a plurality of outlet passages extending through the mantle surface in a department 18 limited by said partition wall 13 and said end wall 7. Preferably the openings are equally distributed along the periphery of the drum and may be elongated in that direction.

A helicoidal flange element 19 having a varying extension in direction from the drum is positioned inside of the latter and is adapted to follow the drum 1 in the rotation movement of the latter and consequently to feed the slurry 4 along the drum in the direction preferably towards an opening 20 in one end 1A of the drum, through which the dewatered material 21 is being discharged for collection and removal.

The liquid 3 which flows through the opening 2 of the drum mantle will be collected in a department 22 below the drum 1 and directed as shown by the arrow 23 to a discharge pipe 24.

Surplus slurry 17 flowing over the inner edge 13A of the partition wall 13 will be received by a plate 25 positioned between the department 22 and an outlet opening 26 for discharge of the surplus slurry 17 from where the latter may be conducted back into the drum again.

A sensor means 27 can suitably be provided in connection with the spillway drain 15 in order to control the amount of slurry delivered into the dewatering device and to interrupt the delivery of slurry 4 to the interior 5 of the drum when the amount of slurry passing the wall edge 13A is too high.

The openings 2 of the drum mantle may be cleansed by means of a rotating brush 28, the bristles of said brush being adapted to penetrate into the openings 2 and cleanse them from impurities.

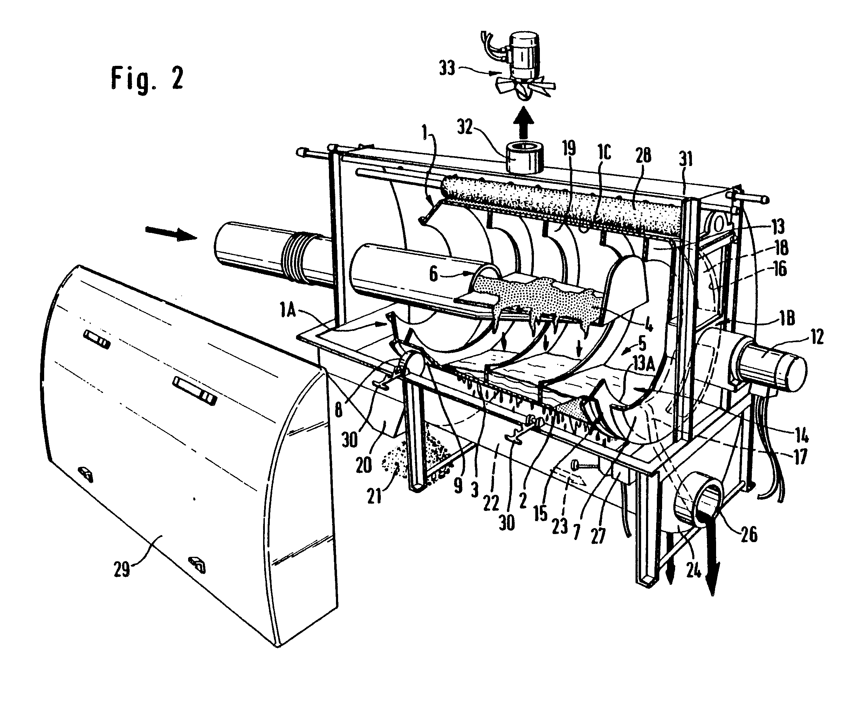

In Fig. 2 is shown a further preferred embodiment of a separating device made according to the invention, whereby parts which functionally correspond to similar parts in the device according to Fig. 1 have been given corresponding reference numerals. In Fig. 2 is further shown a cover 29, which by means 30 detachably can be

connected to a stationary housing-portion 31, whereby the device can be easily inspected. The charging device 6 is also different from the one described above but the function is generally the same.

At the top of the housing portions is provided an air outlet passage 32 through which air can be discharged from the interior of the device, preferably by means of a fan device 33.

The invention is not limited by the two examples of embodiment described above and illustrated in the drawings, but may be varied within the range of the accompanying claims. By way of example the drum 1 may be adapted to be variably adjustable to a desired angle of elevation.

## Claims

1. A device for separating a liquid (3) from a slurry (4) and which comprises a rotatable longitudinally extending drum (1) provided with an inlet at one end thereof, and internally having a helicoidally extending flange element (19) for feeding the slurry along the drum and which follows the drum in the rotation movement of the drum, and which flange element (19) being received in a slurry receiving department (14), to which a charging device (6) for free supply of slurry (4) debouches and which is provided with liquid passage openings (2) through the drum mantle wall, a wall element (13) being positioned inside of the drum mantle at one end of the slurry department, the said wall element (13) acting as a partition between the department (14) and a spillway opening means (15) which are positioned at a distance from each other, characterized by the department partition wall element (13) being a ring shaped narrowing disc member connected to the internal surface (1C) of the mantle of the drum (1) and extending in a direction towards the centre of the drum (1) where it is limited by a free edge (13A) adapted to be overflowed by surplus slurry (17), between the wall element (13) and an end wall (7) on the opposite side of the department (14) a chamber (18) being positioned, from which a plurality of outlet passages (16) extend through the mantle of the drum, the said end wall (7) being connectable to means (12) for driving and/or supporting the drum (1), and that the liquid passage openings (2) and the surplus slurry outlet passages (16) debouch to two from each other separated spaces (22, 24; 25, 26).

2. A device according to claim 1, characterized by a drive and bearing device (12) being connected with the central portion (10) of said end wall (7).

3. A device according to claim 1 or 2, characterized by said partition wall element (13) being positioned near one end of said helicoidally extending flange element (19) near the inlet portion of the latter, and an outlet passageway being positioned near the oppposite end of said flange element for discharge of dewatered material (21) fed through the drum by means of said flange element (19).

4. A device according to one of the claims 1 to 3, characterized by outlet passages being constituted by openings (16) which are equidistantly distributed along the periphery of said mantle of the drum (1).

5. A device according the claim 4, characterized by said openings (16) being extended along the periphery of the drum (1).

## Patentansprüche

1. Vorrichtung zur Abscheidung einer Flüssigkeit (3) von einem Schlamm (4), die eine drehbare, sich in Längsrichtung ausdehnende Trommel (1) aufweist, die an ihrem einen Ende mit einem Einlaß versehen ist und in ihrem Innenraum ein sich spiralförmig erstreckendes Flanschteil (19) aufweist, das zur Förderung des Schlamms längs der Trommel dient, der Trommel bei Drehung derselben folgt und in einer Schlammaufnahmekammer (14) angeordnet ist, in die sich ein Zulauf (6) zur freien Einleitung von Schlamm (4) öffnet und die durch die Trommelmantelwandung mit Flüssigkeitsauslaßlöchern (2) versehen ist, wobei ein Wandteil (13) innerhalb des Trommelmantels an einem Ende der Schlammkammer angeordnet ist, welches als Trennwand zwischen der Kammer (14) und einem Überlaufauslaß (15) dient, die in einem Abstand zueinander angeordnet sind, dadurch gekennzeichnet, daß das Wandteil (13) zur Kammerabtrennung als ringförmige Verengungsscheibe ausgebildet ist, die mit der Innenmantelfläche (1C) der Trommel (1) verbunden ist und sich in einer Richtung auf die Mitte der Trommel (1) hin erstreckt, wo es durch eine freie Kante (13A) begrenzt ist, die derart ausgeführt ist, daß sie durch überschüssigen Schlamm (17) überströmt wird, wobei zwischen dem Wanteil (13) und einer Stirnwand (7) auf der entgegengesetzten Seite der Kammer (14) eine Kammer (18) angeordnet ist, von der eine Vielzahl Austrittsöffnungen (16) durch den Mantel der Trommel verlaufen, wobei die Stirnwand (7) mit einem Element (12) verbindbar ist, das zum Antrieb und/oder zur Lagerung der Trommel (1) dient, und daß die Flüssigkeitsdurchloaßlöcher (2) und die Austrittsöffnungen (16) für den überschüssigen Schlamm sich in zwei voneinander getrennte Raüme (22, 24; 25, 26) öffnen.

2. Vorrichtung nach Anspruch 1, gekennzeichnet durch eine Antriebs- und Lagervorrichtung (12), die mit dem Mittelabschnitt (10) der Stirnwand (7) verbunden ist.

3. Vorrichtung nach Anspruch 1 oder 2, gekennzeichnet durch eine Trennwand (13), die nahe einem Ende des spiral-förmig sich erstreckenden Flanschelements (19) nahe dessen Einlaßabschnitt angeordnet ist, und durch eine Auslaßöffnung, die nahe dem entgegengesetzten Ende des Flanschteils zur Entladung von entwässertem Stoff (21) angeordnet ist, der mittels des Flanschelements (19) durch die Trommel gefördert wird.

4. Vorrichtung nach einem der Ansprüche 1 bis 3, gekennzeichnet durch Auslaßöffnungen, die durch Öffnungen (16) gebildet werden, die im gleichmäßigen Abstand um den Umfang des Mantels der Trommel (1) verteilt sind.

5. Vorrichtung nach Anspruch 4, dadurch gekennzeichnet, daß die Öffnungen (16) längs dem Umfang der Trommel (1) ausgedehnt sind.

**Revendications**

1. Dispositif destiné à séparer un liquide (3) d'une boue (4), et comprenant un tambour rotatif (1) dirigé longitudinalement, comportant une entrée à l'une de ses extrémités, et comportant en son intérieur une nervure (19) s'étendant hélicoïdalement, destiné à transporter la boue le long du tambour et suivant le tambour dans le mouvement de rotation dudit tambour, ladite nervure (19) étant disposée dans un compartiment (14) de réception de la boue, dans lequel débouche un dispositif de chargement (6) assurant une libre alimentation en boue (4), et qui comporte des ouvertures de passage de liquide (2) traversant la paroi du corps du tambour, un élément de paroi (13) étant positionné à l'intérieur du corps du tambour à l'une des extrémités du compartiment de réception de la boue, ledit élément de paroi (13) jouant le rôle d'une cloison de séparation entre le compartiment (14) et une ouverture de déversement (15) positionnées avec un intervalle mutuel, caractérisé en ce que l'élément de paroi (13) jouant le rôle de cloison de séparation du compartiment est un disque annualire de rétrécissement relié à la surface intérieure (1C) du corps du tambour (1) et s'étendant en direction du centre du tambour (1) où il est limité par un bord libre (13A) susceptible d'être franchi par un excès de boue (17), une chambre (18) étant positionnée entre l'élément de paroi (13) et une paroi terminale (7) du côté opposé du compartiment (14), chambre de laquelle une pluralité de passages de sortie (16) partent en traversant le corps du tambour, ladite paroi terminale (7) pouvant être reliée à des moyens (12) pour entraîner et/ou supporter le tambour (1) et en ce que les ouvertures de passage de liquide (2) et les passages (16) de sortie de la boue en excès débouchent dans deux espaces (22, 24; 25, 26) mutuellement séparés.

2. Dispositif selon la revendication 1, caractérisé en ce qu'un dispositif d'entraînement et de support (12) est relié à la portion centrale (10) de ladite paroi terminale (7).

3. Dispositif selon la revendication 1 ou 2, caractérisé en ce que ledit élément de paroi (13) constituant une cloison de séparation est positionné près de l'une des extrémités de ladite nervure (19) s'étendant hélicoïdalement près de la portion d'entrée de cette dernière, et en ce qu'un passage de sortie est positionné près de l'extrémité opposée de ladite nervure pour évacuer la matière (21) asséchée transportée à travers le tambour au moyen de la nervure (19).

4. Dispositif selon l'une quelconque des revendications 1 à 3, caractérisé en ce que les passages de sortie sont constitués par des ouvertures (16) réparties à intervalles égaux suivant la périphérie dudit corps de tambour (1).

5. Dispositif selon la revendication 4, charactérisé en ce que les ouvertures (16) s'étendent suivant la périphérie du tambour (1).

Fig. 1

0 112 893

# Fig. 2